# FASCICULE DE BREVET EUROPEEN

(11) **EP 3 149 983 B1**
(45) Date de publication et mention de la délivrance du brevet: **04.07.2018**
(21) Numéro de dépôt: 15732799.0
(22) Date de dépôt: 26.05.2015
(51) Int. Cl.: H04W 8/18

(54) **PROCEDE ET SERVEUR DE GESTION DE PROFILS**
PROFILVERWALTUNGSVERFAHREN UND SERVER
PROFILE MANAGEMENT METHOD AND SERVER

(30) Priorité: 27.05.2014 FR 1454765
(43) Date de publication de la demande: 05.04.2017
(73) Titulaire: IDEMIA France, 92700 Colombes (FR)
(72) Inventeur: DANREE, Arnaud, F-92700 Colombes (FR); LARIGNON, Guillaume, F-92700 Colombes (FR)
(74) Mandataire: Delumeau, François Guy
(86) Numéro de dépôt international: PCT/FR2015/051379
(87) Numéro de publication internationale: WO 2015/181485

(56) Documents cités:
- EP-A1- 2 600 587
- EP-A1- 2 680 627
- KR-A- 20130 049 730
- KR-A- 20140 024 796

## Description

### Arrière-plan de l'invention

L'invention se situe dans le domaine de la fourniture d'un profil à une entité sécurisée incorporée dans un terminal de communication mobile.

On rappelle de façon préliminaire qu'un « profil », dans le contexte de l'invention, est un ensemble de fichiers, de données et d'applications installé sur ou destiné à une entité sécurisée et permettant au terminal qui incorpore cette entité sécurisée, lorsque ce profil est activé, d'accéder aux services d'un réseau de télécommunication mobile définis par ce profil.

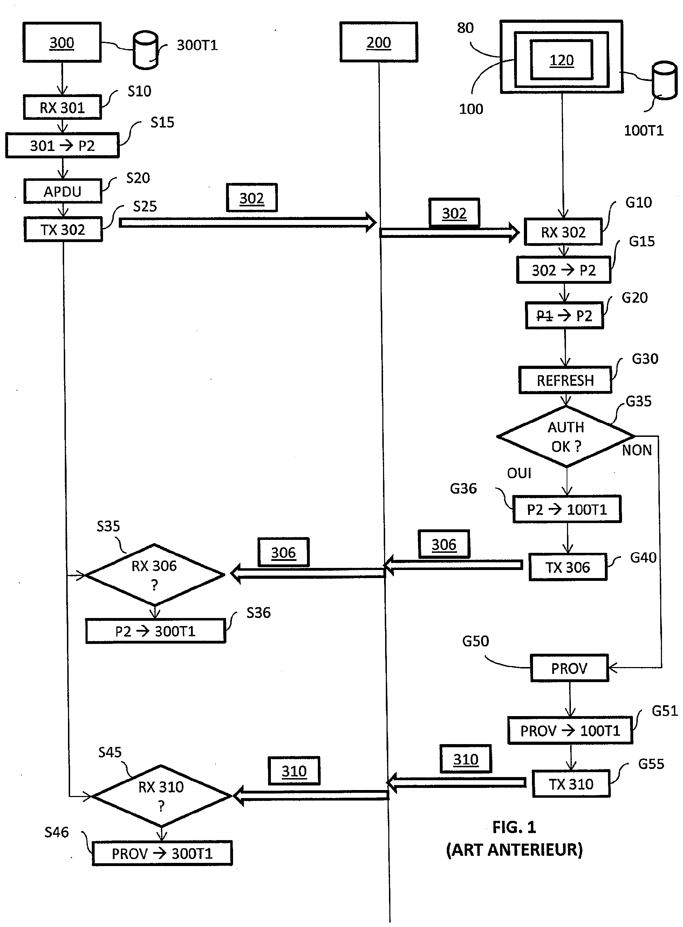

La figure 1 illustre un procédé de gestion de profils conforme à l'état actuel de la technique, tel que divulgué par KR20140024796 A. Sur cette figure on a représenté un serveur de gestion de profils 300, un routeur réseau 200 et une entité sécurisée 100 incorporée dans un terminal mobile 80. Cette entité sécurisée 100 est une entité de type eUICC (en anglais « *embedded Universal Integrated Circuit Card*») telle que définie par le GSMA (GSM Association). On rappelle que contrairement aux cartes SIM amovibles, une entité eUICC est une entité, généralement soudée, en tout état de cause qui n'est pas destinée à être enlevée ou remplacée et qui permet le changement de profils de façon sécurisée.

Nous supposerons que le serveur de gestion de profils 300 reçoit une requête 301, au cours d'une étape S10, pour activer un profil sur une entité sécurisée. Cette requête peut être du type :
*request(enable-profile(EID, ICCID))*
dans lequel :
- EID est l'identifiant unique de l'élément sécurisé eUICC ; et
- ICCID est un identifiant unique permettant d'identifier un profil dans une entité sécurisée.

On rappelle que l'activation d'un profil dans un élément sécurisé consiste à désactiver le profil courant actif et à activer le nouveau profil spécifié dans la requête.

De retour à la figure 1, le serveur de gestion de profils 300 maintient une table 300T1 de gestion de profils pour chaque élément sécurisé EID, telle que représentée à l'Annexe A.

Cette table comporte pour chaque profil :
- l'identifiant ICCID du profil dans l'entité sécurisée EID ;
- le type de ce profil. Dans l'exemple de l'Annexe A, la table comporte un profil de provisionnement (en anglais « *provisioning profile* ») et deux profils opérationnels P1, P2 ;
- l'état du profil : désactivé ou actif ; et
- un numéro de téléphone MSISDN associé à ce profil.

On remarque dans cet exemple, que le serveur de gestion de profils 300, a pour connaissance, que le profil actif courant de l'élément sécurisé 100 est le profil opérationnel P1.

Au cours d'une étape S15, sur réception de la requête 301, le serveur de gestion de profil 300 identifie dans la table 300T1, le profil P2 à partir de l'identifiant ICCID contenu dans cette requête, puis génère une requête APDU (en anglais «*Application Protocol Data Unit*») conformément au standard IS07816 :
*ENABLE_PROFILE(P2)*

Au cours d'une étape S20, le serveur de gestion de profil 300 encrypte cette commande APDU et lui affixe un en-tête de sécurité, par exemple un en-tête de sécurité SCP80 conforme au standard Global Platform.
*Scp80-header* // *ENABLE_PROFILE(P2)*

Au cours d'une étape S25, le serveur de gestion de profils 300 utilise un service de transport pour envoyer la trame construite à l'étape S20 au numéro de téléphone MSISDN associé au profil actif P1 dans la table 300T1. Le serveur de gestion de profil définit une durée de vie *time-to-live* pour ce message, par exemple égale à 24 heures.

Le service de transport utilisé pour acheminer ce message et gérer la durée de vie précitée peut par exemple être le service d'envoi de messages courts SMS, le service GGSN ou le réseau Internet. Nous supposerons par la suite qu'il s'agit du service SMS.
*SMS(Scp80-header* // *ENABLE_PROFILE(P2), MSISDN(Pl), time-to-live)*

Ce message SMS, référencé 302 sur la figure 1, est acheminé jusqu'à un gestionnaire de profils 120 (en anglais « *Profile Status Manager*») de l'entité sécurisée 100 via le réseau de transport, et notamment via le routeur 200. Le gestionnaire de profils 120 reçoit le message SMS 302 au cours d'une étape G10.

Le gestionnaire de profils 120 de l'entité sécurisée 100 maintient une table 100T1 de gestion de profils, telle que représentée à l'Annexe B. Cette table est similaire à la table 300T1 maintenue par le serveur de gestion de profils 300 pour cette entité sécurisée, sauf en ce qu'elle ne comporte pas de quatrième colonne MSISDN.

On remarque dans cet exemple, que le profil actif de l'élément sécurisé EID est le profil P1 et que la connaissance du serveur de gestion de profils 300 est donc correcte.

Au cours d'une étape G15, le gestionnaire de profils 120 retire l'entête de sécurité SCP80 et décrypte le contenu du message SMS 302 :
*decrypt-scp80(302)*

Au cours d'une étape G20, le gestionnaire de profils 120 exécute la commande d'activation du profil P2, ce qui revient à désactiver le profil courant actif P1 et à activer le nouveau profil P2.

Au cours d'une étape G30, le gestionnaire de profils 120 place une commande SIM Toolkit REFRESH dans le buffer destiné au terminal mobile 80. Le traitement de cette commande REFRESH a pour effet la réinitialisation de l'entité sécurisée 100 et l'exécution d'une procédure de redémarrage du terminal mobile 80. Au cours de cette procédure de redémarrage, le terminal mobile lit la table 100T1 et démarre la procédure d'authentification associée au nouveau profil P2.

Cette procédure d'authentification est définie par la norme ETSI TS 131 102 V11.6.0 (2013-10).

Au cours d'un test G35, le gestionnaire de profils 120 vérifie si la procédure d'authentification s'est déroulée avec succès.

Si c'est le cas, le gestionnaire de profils 120 met à jour sa table 100T1 au cours d'une étape G36 et envoie, au cours d'une étape G40, un message SMS 306 au serveur de gestion de profils 300 pour lui indiquer que le profil P2 est effectivement actif.
*send-SMS(P2-enabled-OK, MSISDN(300))*

Le gestionnaire de profils 120 peut par exemple retrouver le numéro MSISDN du serveur 300 à partir du message 302 ou obtenir ce numéro à partir d'une mémoire de l'entité sécurisée. Le message 304 est normalement reçu par le serveur 300 de gestion de profils au cours d'une étape S30.

Ce message 306 est normalement reçu par le serveur 300 de gestion de profils au cours d'une étape S35. Auquel cas, le serveur 300 de gestion de profils mémorise dans sa table 300T1 que le profil P2 est actif de sorte que les tables 300T1 et 100T1 sont synchronisées (étape S36).

Dans le cas où la procédure d'authentification échoue, le gestionnaire de profils 120 déclenche une procédure de secours (en anglais « *fallback procédure* ») consistant à activer le profil de provisionnement (étape G50), à mettre à jour la table 100T1 (étape G51) et à envoyer (étape G55) un message SMS 310 au serveur de gestion de profils 300 pour lui indiquer que le profil de provisionnement a été activé.
*send-SMS(provisioning-enabled-OK, MSISDN(300))*

Ce message 310 est normalement reçu par le serveur 300 de gestion de profils au cours d'une étape S45. Auquel cas, le serveur 300 de gestion de profils mémorise dans sa table 300T1 que le profil P2 est actif de sorte que les tables 300T1 et 100T1 sont synchronisées (étape S46).

Par conséquent, et en résumé, quatre messages sont susceptibles d'être envoyés par le gestionnaire de profils 120 de l'entité sécurisée 100 à destination du serveur 300 de gestion de profils :
- le message 304 d'accusé de réception du message 302 d'activation du profil P2 ;
- le message 306 indiquant que l'activation du profil P2 a été effectuée avec succès ;
- le message 308 indiquant que l'activation du profil P2 a échouée ;
- le message 310 indiquant que l'activation du profil de provisionnement a été effectuée avec succès.

La non-réception, par le serveur 300 de gestion de profils des messages 306 ou 310 indiquant l'activation effective du profil P2 ou du profil de provisionnement entraîne une désynchronisation des tables de gestion de profils 300T1 et 100T1 puisque dans l'une ou l'autre de ces situations le serveur de gestion de profils considère que le profil P1 est toujours le profil courant actif. Cette situation est dommageable car si le serveur 300 souhaite ultérieurement contacter l'entité sécurisée 100, par exemple pour lui communiquer un script de mise à jour, il utilisera, par consultation de la table 300T1, le numéro de téléphone MSISDN du profil P1 au lieu du numéro du profil effectivement actif.

La présente invention propose un procédé de gestion de profils qui ne présente pas les inconvénients précités.

### Objet et résumé de l'invention

Plus précisément et selon un premier aspect, l'invention concerne un procédé mis en oeuvre par un serveur de gestion de profils pour gérer les profils d'une entité sécurisée. Ce procédé comporte :
- une étape d'envoi d'un message à cette entité sécurisée pour modifier le profil actif de cette entité ;
- une étape d'initialisation et de déclenchement d'un compteur de temps; et
- en cas de non réception par le serveur, avant l'expiration d'une durée prédéterminée comptée à partir dudit déclenchement, d'un message indiquant le profil actif dans ladite entité sécurisée :
- une étape de déclenchement d'une procédure d'audit pour déterminer le profil effectivement actif dans cette entité sécurisée.

Corrélativement, l'invention concerne aussi un serveur de gestion de profils pour gérer les profils d'une entité sécurisée. Ce serveur comporte :
- des moyens d'envoi d'un message à cette entité sécurisée pour modifier le profil actif de cette entité ;
- des moyens d'initialisation et de déclenchement d'un compteur de temps ; et
- en cas de non réception par le serveur, avant l'expiration d'une durée prédéterminée comptée à partir dudit déclenchement, d'un message indiquant le profil actif dans l'entité sécurisée :
- des moyens de déclenchement d'une procédure d'audit pour déterminer le profil effectivement actif dans cette entité sécurisée.

Ainsi, et d'une façon générale, l'invention propose la mise en place d'une procédure d'audit pour permettre au serveur de gestion de profils de déterminer le profil effectivement actif dans une entité sécurisée dès lors que ce serveur ne reçoit pas cette information explicitement suite à l'envoi d'un message visant à changer de profil actif.

L'invention permet ainsi une synchronisation entre les tables de gestion de profils gérées par le serveur et par l'entité elle-même.

L'invention permet surtout au serveur de gestion de profils de garder une information exacte quant au profil actif courant dans l'élément sécurisé. Il peut ainsi, par exemple, adresser ce profil sans échec, pour lui communiquer un script de mise à jour.

Le message envoyé par le serveur pour modifier le profil actif de l'entité peut être :
- un message d'installation et d'activation d'un nouveau profil ;
- un message pour désactiver ou supprimer le profil actif au profit d'un nouveau profil opérationnel ou du profil de provisionnement ;
- tout message susceptible d'entraîner une modification du profil actif ou un basculement vers le profil de provisionnement en cas d'échec de la modification.

Dans un mode particulier de réalisation, le compteur de temps est initialisé à une durée correspondant à la durée de vie du message envoyé par le serveur pour modifier le profil actif de l'entité sécurisée.

Cette caractéristique permet de retarder au maximum le déclenchement de la procédure d'audit.

Dans un mode particulier de réalisation, la procédure d'audit consiste à envoyer au moins un script à ladite entité sécurisée pour obtenir au moins l'état :
- du profil de l'entité sécurisée que ledit serveur considère actif avant modification ;
- du profil de l'entité sécurisée que ledit serveur considère actif après modification ;
- du profil de provisionnement de l'entité sécurisée.

En variante, la procédure d'audit consiste à envoyer au moins un script à l'entité sécurisée pour obtenir l'état de tous les profils de l'entité connus du serveur de gestion de profils.

Dans un mode particulier de réalisation, ce ou ces scripts comportent une commande APDU GET STATUS. Cette commande permet avantageusement d'obtenir un état sans le modifier. En variante, on peut utiliser une commande GET DATA, une commande SELECT ou toute autre commande ou ensemble de commandes permettant de lire l'état dans un ou plusieurs fichiers de l'entité sécurisée sans le modifier.

Les scripts précités peuvent être envoyés les uns après les autres sans attendre la durée de vie du message transportant ces scripts. En variante, on attend avant d'envoyer un script, la durée de vie du message d'envoi du script précédent si aucune réponse n'est reçue à l'envoi de ce message.

Dans un mode particulier de réalisation, les différentes étapes du procédé de régulation d'émission sont déterminées par des instructions de programmes d'ordinateurs.

En conséquence, l'invention vise aussi un programme d'ordinateur sur un support d'informations, ce programme étant susceptible d'être mis en oeuvre par un ordinateur, ce programme comportant des instructions adaptées à la mise en oeuvre des étapes du procédé de régulation d'émission tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins et aux annexes qui en illustrent un exemple de réalisation dépourvu de tout caractère limitatif. Sur les figures :
- la figure 1 déjà décrite illustre un procédé de gestion de profils conforme à l'état de la technique;
- la figure 2 représente un serveur de gestion de profils conforme à l'invention;
- la figure 3 illustre un procédé de gestion de profils conforme à un mode particulier de réalisation de l'invention.

### Description détaillée d'un mode de réalisation

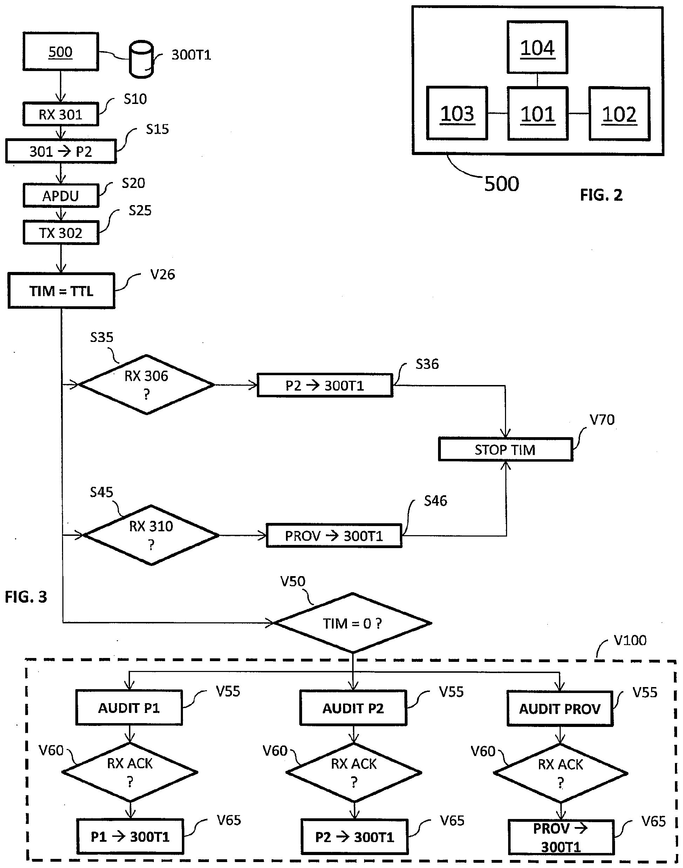

La figure 2 représente un serveur de gestion de profils 500 conforme à l'invention. Ce serveur de gestion de profils 500 comporte un processeur 101, une mémoire vive 102, une mémoire morte de type ROM 103 et un module 104 d'accès au réseau. Ces différents éléments sont reliés entre eux par un système de bus non référencé.

Le module 104 est apte à émettre et à recevoir des trames et des messages du type des messages 301, 302, 304, 306 et 308 décrits en référence à la figure 1.

Le serveur de gestion de profils 500 met en oeuvre un procédé de gestion de profils conforme à l'invention et dont les principales étapes sont représentées sous forme d'organigramme à la figure 3. Ce procédé de gestion de profils peut être mis en oeuvre par l'exécution d'un programme d'ordinateur stocké dans la mémoire morte 103.

La figure 3 représente sous forme d'organigramme les principales étapes d'un procédé de gestion de profils conforme à l'invention. Les étapes Sxx de ce procédé sont identiques aux étapes Sxx du procédé de gestion de profils de l'état de la technique déjà décrites en référence à la figure1.

Le procédé de gestion de profils conforme à l'invention est remarquable en ce qu'il comporte après l'étape S25 d'envoi d'un message 302 de modification du profil actif de l'entité sécurisée 100, une étape V26 d'initialisation d'un compteur de temps, constitué dans cet exemple par un compte à rebours TIM.

En variante, le compteur de temps peut être constitué par une horloge ou tout moyen permettant de mesurer une durée.

Dans le mode de réalisation décrit ici, ce compte à rebours TIM est initialisé à une durée correspondant à la durée de vie du message 302.

Conformément à l'invention, si le compte à rebours TIM vient à expiration avant la réception d'un message 306 ou 310 indiquant l'activation effective d'un nouveau profil (profil P2 ou profil de provisionnement PROV), le serveur de gestion de profils 500 déclenche une procédure d'audit référencée V100 sur la figure 3.

A cet effet, le procédé selon l'invention comporte une étape V50 pour vérifier si le compte à rebours TIM a expiré, la procédure d'audit étant déclenchée si le résultat du test V50 est positif.

Cette procédure d'audit consiste à envoyer plusieurs scripts à l'entité sécurisée 100 pour obtenir au moins l'état :
- du profil que le serveur 500 considère actif à l'instant courant, P1 dans l'exemple décrit ici ;
- du profil pour lequel le serveur 500 demande l'activation, P2 dans l'exemple décrit ici ;
- du profil de provisionnement PROV.

En variante, la procédure d'audit consiste à envoyer des scripts pour obtenir l'état de tous les profils de l'entité sécurisée 100 connus du serveur 500, à savoir de tous les profils listés dans la table 300T1 de gestion de profils pour cette entité.

Dans le mode de réalisation décrit ici, les différents scripts de demandes d'état sont envoyés à chacun des profils en parallèle (étape V55), en utilisant la commande APDU GET STATUS.
*SMS(Scp80-header* // *GET STATUS, MSISDN(P1))*
*SMS(ScpS0-17eader* // *GET STATUS, MSISDN(P2))*
*SMS(Scp80-header* // *GET STATUS, MSISDN(PROV))*

L'utilisation de la commande GET STATUS permet avantageusement de connaître l'état du profil, sans modifier cet état.

Lorsque le serveur de gestion de profils 500 reçoit un accusé de réception (étape V60), il met à jour sa table 300T1 de gestion de profils (étape V65).

La table 300T1 de gestion de profils du serveur 500 conforme à l'invention est ainsi synchronisée avec celle 100T1 de l'entité sécurisée, même en cas d'échec dans l'acheminement des messages 306 et 310.

Si le serveur 500 reçoit un de ses messages 306 ou 310 avant l'expiration du comte à rebours TIP, il désarme ce compte à rebours au cours d'une étape V70.

Dans le mode de réalisation décrit ici, les scripts de demandes d'état de profil sont envoyés en parallèle. Ils peuvent en variante être envoyés en série.

### ANNEXE A

**Table 300T1**

| | **ICCID** | **Type de profile** | **Etat** | **MSISDN** |
|---|---|---|---|---|
| | 89103900000116765 | Provisionnement | Désactivé | +34717742007 |
| P1 : | 91038900000167165 | Opérationnel | Actif | +34717742009 |
| P2 : | 98139000001671605 | Opérationnel | Désactivé | +34177420097 |

### ANNEXE B

**Table 100T1**

| | **ICCID** | **Type de profile** | **Etat** |
|---|---|---|---|
| | 89103900000116765 | Provisionnement | Désactivé |
| P1 : | 91038900000167165 | Opérationnel | Actif |
| P2 : | 98139000001671605 | Opérationnel | Désactivé |

## Revendications

1. Procédé mis en oeuvre par un serveur (500) de gestion de profils pour gérer les profils, P1, P2, PROV, d'une entité sécurisée (100) comportant :
- une étape (S25) d'envoi d'un message (302) à ladite entité sécurisée pour modifier le profil actif de ladite entité ;
- une étape (V50) d'initialisation et de déclenchement d'un compteur de temps, TIM ; et
- en cas de non réception par ledit serveur (500), avant l'expiration d'une durée prédéterminée comptée à partir dudit déclenchement, d'un message indiquant le profil actif dans ladite entité sécurisée (100) :
- une étape de déclenchement d'une procédure d'audit (V100) pour déterminer le profil effectivement actif dans ladite entité sécurisée (100).

2. Procédé de gestion de profils selon la revendication 1, **caractérisé en ce que** ledit message (302) pour modifier le profil actif de ladite entité est un message d'activation d'un nouveau profil, P2, ou un message de désactivation du profil actif courant, P1.

3. Procédé de gestion de profils selon la revendication 1 ou 2, **caractérisé en ce que** ledit compteur de temps est initialisé à une durée correspondant à la durée de vie du message (302) envoyé par ledit serveur pour modifier le profil actif de l'entité sécurisée (100).

4. Procédé de gestion de profils selon l'une quelconque des revendications 1 à 3, **caractérisé en ce que** ladite procédure d'audit consiste à envoyer (V55) au moins un script à ladite entité sécurisée pour obtenir au moins l'état :
- du profil, P1, de ladite entité (100) que ledit serveur 500 considère actif avant ladite modification ;
- du profil, P2, de ladite entité (100) que ledit serveur 500 considère actif après ladite modification ;
- du profil de provisionnement, PROV, de ladite entité (100).

5. Procédé de gestion de profils selon l'une quelconque des revendications 1 à 3, **caractérisé en ce que** ladite procédure d'audit consiste à envoyer (V55) au moins un script à ladite entité sécurisée pour obtenir l'état de tous les profils de ladite entité (100) connus dudit serveur.

6. Procédé de gestion de profils selon la revendication 4 ou 5, **caractérisé en ce que** ledit au moins un script comporte une commande APDU GET STATUS.

7. Procédé de gestion de profils selon la revendication 4 à 6, **caractérisé en ce que** lesdits scripts sont envoyés en parallèle.

8. Serveur (500) de gestion de profils pour gérer les profils, P1, P2, PROV, d'une entité sécurisée (100) comportant :
- des moyens (104) d'envoi d'un message (302) à ladite entité sécurisée pour modifier le profil actif de ladite entité ;
- des moyens (101) d'initialisation et de déclenchement d'un compteur de temps, TIM; et
- en cas de non réception par ledit serveur (500), avant l'expiration d'une durée prédéterminée, TIM,
comptée à partir dudit déclenchement, d'un message indiquant le profil actif dans ladite entité sécurisée (100) :
- des moyens (101) de déclenchement d'une procédure d'audit (V100) pour déterminer le profil effectivement actif dans ladite entité sécurisée (100).

9. Programme d'ordinateur comportant des instructions pour l'exécution des étapes d'un procédé de gestion de profils selon l'une quelconque des revendications 1 à 7 lorsque ledit programme est exécuté par un ordinateur.

10. Support d'enregistrement lisible par un ordinateur sur lequel est enregistré un programme d'ordinateur comprenant des instructions pour l'exécution des étapes d'un procédé de gestion de profils selon l'une quelconque des revendications 1 à 7.

## Patentansprüche

1. Verfahren, das von einem Profilverwaltungsserver (500) umgesetzt wird, um die Profile P1, P2, PROV einer gesicherten Einheit (100) zu verwalten, umfassend:
- einen Schritt (S25) des Sendens einer Nachricht (302) an die gesicherte Einheit, um das aktive Profil der Einheit zu ändern,
- einen Schritt (V50) des Initialisierens und des Auslösens eines Zeitzählers TIM und
- falls von dem Server (500) vor dem Ablauf einer vorbestimmten Zeitdauer, die ab dem Auslösen gerechnet wird, keine Nachricht erhalten wird, die das aktive Profil in der gesicherten Einheit (100) angibt:
- einen Schritt des Auslösens eines Prüfverfahrens (V100), um das tatsächlich aktive Profil in der gesicherten Einheit (100) zu bestimmen.

2. Verfahren zum Verwalten von Profilen gemäß Anspruch 1, **dadurch gekennzeichnet, dass** die Nachricht (302) zum Ändern des aktiven Profils der Einheit eine Aktivierungsnachricht eines neuen Profils P2 oder eine Deaktivierungsnachricht des aktuellen aktiven Profils P1 ist.

3. Verfahren zum Verwalten von Profilen gemäß Anspruch 1 oder 2, **dadurch gekennzeichnet, dass** der Zeitzähler auf eine Zeitdauer initialisiert wird, die der Lebensdauer der Nachricht (302) entspricht, die von dem Server gesendet wird, um das aktive Profil der gesicherten Einheit (100) zu ändern.

4. Verfahren zum Verwalten von Profilen gemäß einem der Ansprüche 1 bis 3, **dadurch gekennzeichnet, dass** das Prüfverfahren darin besteht, mindestens ein Skript an die gesicherte Einheit zu senden (V55), um mindestens den Zustand:
- des Profils P1 der Einheit (100) zu erhalten, das der Server 500 vor der Änderung als aktiv betrachtet,
- des Profils P2 der Einheit (100) zu erhalten, das der Server 500 nach der Änderung als aktiv betrachtet,
- des Bereitstellungsprofils PROV der Einheit (100) zu erhalten.

5. Verfahren zum Verwalten von Profilen gemäß einem der Ansprüche 1 bis 3, **dadurch gekennzeichnet, dass** das Prüfverfahren darin besteht, mindestens ein Skript an die gesicherte Einheit zu senden (V55), um den Zustand aller Profile der Einheit (100) zu erhalten, die der Server kennt.

6. Verfahren zum Verwalten von Profilen gemäß Anspruch 4 oder 5, **dadurch gekennzeichnet, dass** das mindestens eine Skript einen Befehl APDU GET STATUS aufweist.

7. Verfahren zum Verwalten von Profilen gemäß Anspruch 4 bis 6, **dadurch gekennzeichnet, dass** die Skripte gleichzeitig gesendet werden.

8. Profilverwaltungsserver (500) von Profilen P1, P2, PROV einer gesicherten Einheit (100), umfassend:
- Mittel (104) zum Senden einer Nachricht (302) an die gesicherte Einheit, um das aktive Profil der Einheit zu ändern,
- Mittel (101) zum Initialisieren und zum Auslösen eines Zeitzählers TIM und
- falls von dem Server (500) vor dem Ablauf einer vorbestimmten Zeitdauer TIM, die ab dem Auslösen gerechnet wird, keine Nachricht erhalten wird, die das aktive Profil in der gesicherten Einheit (100) angibt:
- Mittel (101) zum Auslösen eines Prüfverfahrens (V100), um das tatsächlich aktive Profil in der gesicherten Einheit (100) zu bestimmen.

9. Computerprogramm, das Anweisungen für die Ausführung der Schritte eines Verfahrens gemäß einem der Ansprüche 1 bis 7 aufweist, wenn das Programm von einem Computer ausgeführt wird.

10. Computerlesbares Aufzeichnungsmedium, auf dem ein Computerprogramm aufgezeichnet ist, das Anweisungen für die Ausführung der Schritte eines Verfahrens zum Verwalten von Profilen gemäß einem der Ansprüche 1 bis 7 aufweist.

## Claims

1. A method performed by a profile management server (500) for managing the profiles, P1, P2, PROV, of a secure entity (100), the method comprising:
- a step (S25) of sending a message (302) to said secure entity in order to modify the active profile of said entity;
- a step (V50) of initializing and starting a timer, TIM; and
- in the event of said server (500) not receiving a message indicating which profile is active in said secure entity (100) before the expiry of a predetermined duration after said starting of a timer:
- a step of starting an audit procedure (V100) for determining which profile is actually active in said secure entity (100).

2. The profile management method according to claim 1, **characterized in that** said message (302) for modifying the active profile of said entity is a message for activating a new profile, P2, or a message for deactivating the current active profile, P1.

3. The profile management method according to claim 1 or 2, **characterized in that** said timer is initialized on a duration corresponding to the time-to-live of the message (302) sent by said server in order to modify the active profile of the secure entity (100).

4. The profile management method according to any one of claims 1 to 3, **characterized in that** said audit procedure consists in sending (V55) at least one script to said secure entity in order to obtain at least the status:
- of the profile, P1, of said entity (100) that said server (500) considers was active before said modification;
- of the profile, P2, of said entity (100) that said server (500) considers to be active after said modification;
- of the provisions profile, PROV, of said entity (100).

5. The profile management method according to any one of claims 1 to 3, **characterized in that** said audit procedure consists in sending (V55) at least one script to said secure entity in order to obtain the status of all of the profiles of said entity (100) that are known to said server.

6. The profile management method according to claim 4 or 5, **characterized in that** said at least one script includes an APDU GET STATUS command.

7. The profile management method according to claims 4 to 6, **characterized in that** said scripts are sent in parallel.

8. A profile management server (500) for managing the profiles, P1, P2, PROV, of a secure entity (100), the server comprising:
- means (104) for sending a message (302) to said secure entity in order to modify the active profile of said entity;
- means (101) for initializing and starting a timer, TIM; and
- in the event of said server (500) not receiving a message indicating which profile is active in said secure entity (100) before the expiry of a predetermined duration, TIM, after said starting of a timer:
- means (101) for starting an audit procedure (V100) for determining which profile is actually active in said secure entity (100).

9. A computer program including instructions for executing steps of a profile management method according to any one of claims 1 to 7 when said program is executed by a computer.

10. A computer readable data medium storing a computer program including instructions for executing steps of a profile management method according to any one of claims 1 to 7.
